# EUROPEAN PATENT SPECIFICATION

(11) **EP 2 518 301 B1**
(45) Date of publication and mention of the grant of the patent: **04.09.2013**
(21) Application number: 11163942.3
(22) Date of filing: 27.04.2011
(51) Int. Cl.: F02M 31/125, F02M 37/22, B01D 35/18

(54) **Fuel-filter head with integrated heater**
Kraftstofffilterkopf mit integriertem Heizelement
Tête de filtre à carburant avec chauffage intégré

(43) Date of publication of application: 31.10.2012
(73) Proprietor: sigmar S.r.l., 10121 Torino (IT)
(72) Inventor: Faganello, Davide, 10080, Ozegna C.se (TO) (IT); Bertolino, Luca, 10080, Ozegna C.se (TO) (IT)
(74) Representative: Frontoni, Stefano

(56) References cited:
- EP-A1- 0 162 939
- EP-A1- 0 984 157
- EP-A1- 1 158 158
- EP-A1- 1 450 031
- EP-A1- 1 510 685
- EP-A2- 0 581 176
- EP-A2- 1 505 292
- WO-A1-02/079634
- WO-A2-01/92714
- FR-A1- 2 549 148
- US-A- 4 479 477

## Description

The present invention relates to a fuel-filter head unit for internal-combustion engines, of the type comprising a body defining an inlet for the fuel to be filtered, an outlet for the filtered fuel, and an attachment portion for connection of the fuel-filter head unit to a filter container containing a filtering element. In particular, the present invention regards a fuel-filter head unit for a diesel filter for diesel engines.

EP0581176 discloses a fuel-filter head according to the preamble of claim 1. EP 1 158 158 A1, EP 1 450 031 A1, WO 02/079 634 A1 and FR 2 549 148 disclosure further fuel filter heads.

In general, in the automotive field, diesel filters can clog and stop functioning on account of the presence, in the diesel, of components that, at low temperatures, pass into the solid state and obstruct passage of the fuel through the filter.

To prevent this from occurring, it is known to set one or more heating elements designed to heat the diesel before this passes through the filtering element. Specifically, there exist technical solutions in which the heating element is set upstream of the filter, for example in a position corresponding to the delivery duct that conveys the fuel to the filter, and solutions in which the heating element is, instead, provided within the filter itself.

With reference to the latter type of solutions, the solutions up to now developed are afflicted by a poor operating efficiency and a high structural complexity.

The present invention proposes an improvement to said type of solutions. In particular, the present invention envisages a solution in which the heating element is integrated in the fuel-filter head unit in a configuration that is simple and at the same time able to guarantee an efficient heat exchange between the fuel and the heating element.

According to the present invention, the purposes referred to above are achieved thanks to a fuel-filter head unit having the characteristics recalled specifically in the ensuing claims.

The claims form an integral part of the technical teaching provided herein in relation to the present invention.

The invention will now be described, purely by way of non-limiting example, with reference to the annexed representations, in which:
- Figure 1 is an exploded view of a first embodiment of the fuel-filter head unit described herein;
- Figure 2 is a perspective view from beneath of the fuel-filter head unit of Figure 1;
- Figure 3 is a perspective view from beneath of the main body of the fuel-filter head unit of Figure 1;
- Figure 4 illustrates the body of Figure 3, mounted on which are first elements of the heating assembly of the fuel-filter head unit described herein;
- Figure 5 illustrates the body of Figure 3, mounted on which are first and second elements of the heating assembly of the fuel-filter head unit described herein;
- Figure 6 is a schematic illustration of the flow of fuel within the fuel-filter head unit of Figure 1;
- Figure 7 is a cross-sectional view, according to a transverse plane, of the fuel-filter head unit represented in Figure 3;
- Figure 8 is an exploded perspective view of a second embodiment of the fuel-filter head unit described herein;
- Figure 9 illustrates the body of the fuel-filter head unit of Figure 8;
- Figure 10 illustrates the body of Figure 9, mounted on which is the heating assembly of the fuel-filter head unit described herein;
- Figure 11 is a perspective view from beneath of the fuel-filter head unit of Figure 8;
- Figure 12 illustrates in detail items of the fuel-filter head unit of Figure 8; and
- Figure 13 is a schematic illustration of the flow of fuel within the fuel-filter head unit of Figure 8.

Illustrated in the ensuing description are various specific details aimed at providing an in-depth understanding of the embodiments. The embodiments can be provided without one or more of the specific details, or with other methods, components or materials, etc. In other cases, known structures, materials, or operations are not shown or described in detail so that various aspects of the embodiment will not be obscured.

The references used herein are provided only for convenience and hence do not define the sphere of protection or scope of the embodiments.

With reference to the annexed figures, the present invention relates to a head unit 10 for a fuel filter for internal-combustion engines, in particular for a diesel filter for diesel engines. Said fuel-filter head unit comprises a body 2 made of plastic material, defining an inlet 4 for the fuel to be filtered and an outlet 6 for the filtered fuel. In various embodiments, as in the ones illustrated, the body 2 is generically shaped like a half-shell. The inlet 4 and the outlet 6 are provided on the outside of said body and are in fluid communication with the inside thereof.

The body 2 moreover has an attachment portion 8 for connection of the body 2 to a filter container (not illustrated in the figures), contained in which is a filtering element. In this connection, as is known in the prior art, the aforesaid container defines inside it a chamber that is divided, by the filtering element, into a first part, in fluid communication with the inlet 4, and a second part, in fluid communication with the outlet 6. The filtering element has the function of intercepting the foreign bodies and/or the water contained therein and separating them from the fuel. As is known in the art, the filtering element can be anchored to the fuel-filter head unit or else to the container.

In general terms, in the operation of the filter, the fuel enters the filter through the inlet 4 of the fuel-filter head unit 10, flows in the aforesaid container, traverses the filtering element, and finally exits from the filter through the outlet 6 of the fuel-filter head unit.

The fuel-filter head unit described herein is characterized in that integrated therein is a heating assembly 20, designed to heat the fuel before it passes through the filtering element. The annexed figures illustrate two alternative embodiments of said fuel-filter head unit, each of which will be described in greater detail hereinafter.

In general, as is visible in the figures, provided within the body 2 of the fuel-filter head unit 10 is a compartment 12, set within which is the heating assembly 20. Said compartment is in fluid communication with the inlet 4 and is closed by a covering element 14 so as to create within the compartment a flow of fuel that traverses the heating assembly 20. The covering element 14 has an opening 14' that is designed to set the compartment in fluid communication with said container in order to enable the fuel, once it has traversed the compartment, to pass into the container and then proceed along the path referred to above.

It should be noted that the covering element is designed to close the compartment but does not seal it hermetically in order to enable possible air bubbles, present in the filter container, to pass into the compartment passing through the gaps between the covering element and the internal side walls of the body 2, and then be evacuated from the filter together with the flow of fuel.

As may be seen in the figures, the covering element 14 has a covering portion 14a designed to close the compartment 12, and one or more walls 14b, transverse to the portion 14a, which are designed to divide the compartment into distinct spaces that define the path of the flow of fuel within the compartment.

As will be seen in what follows, said path is determined according to the heating assembly envisaged. In any case, said path is determined to obtain an efficient heat exchange between the heating assembly and the flow of fuel.

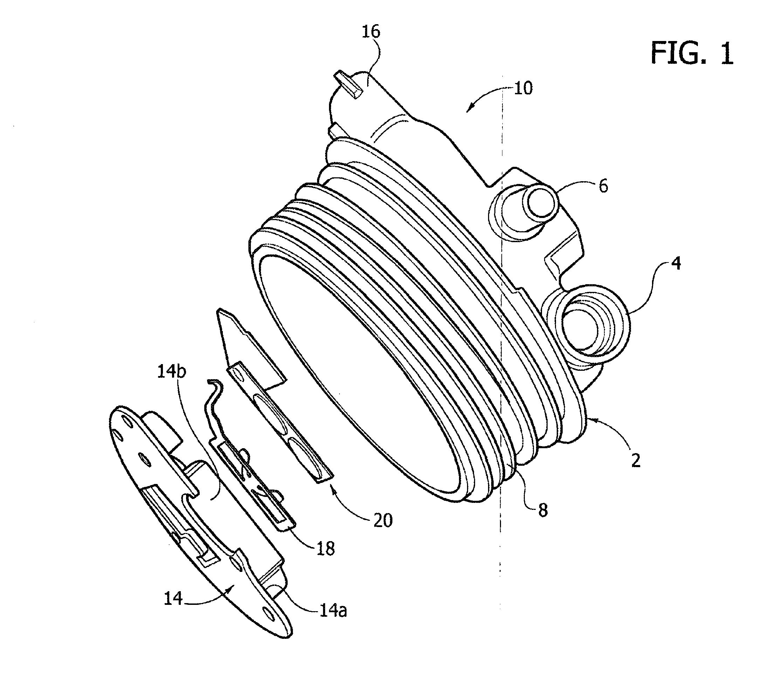

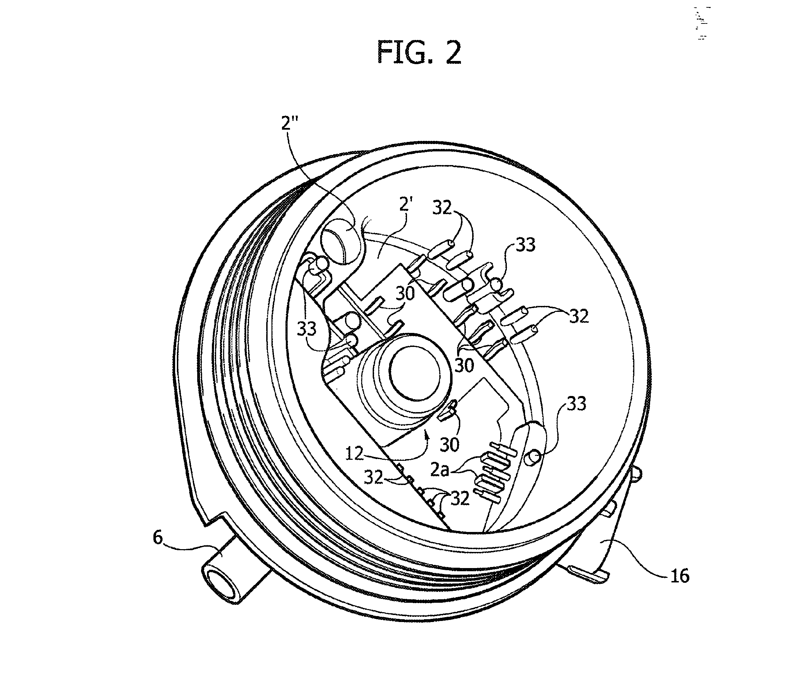

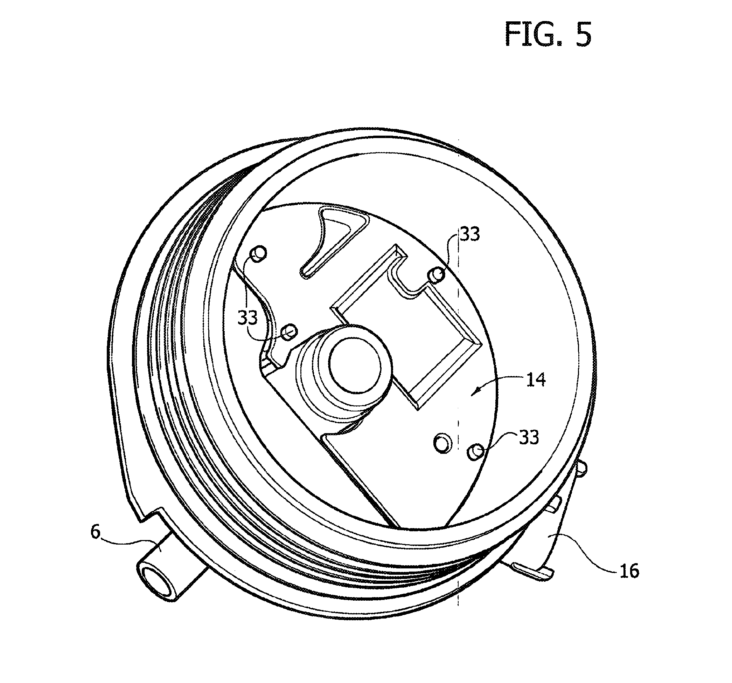

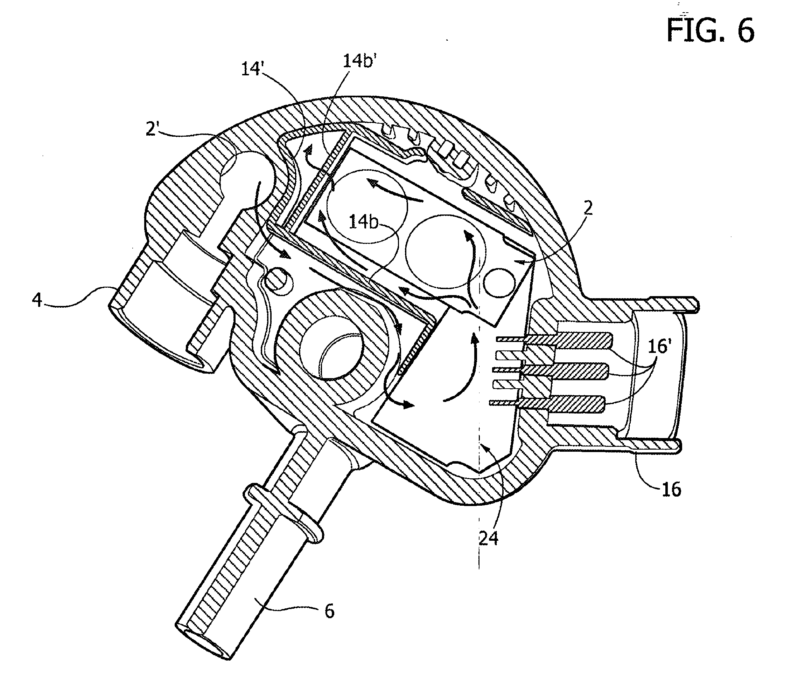

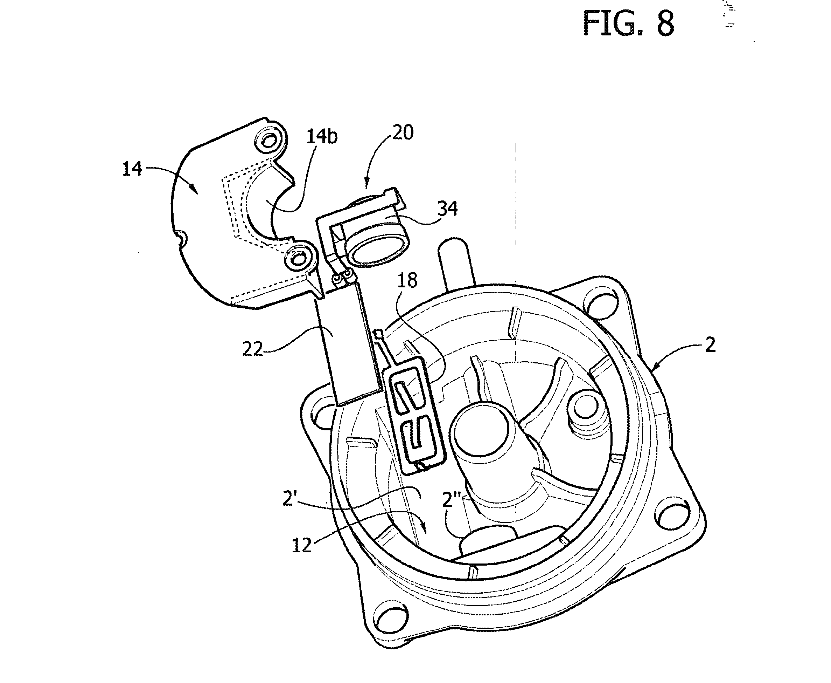

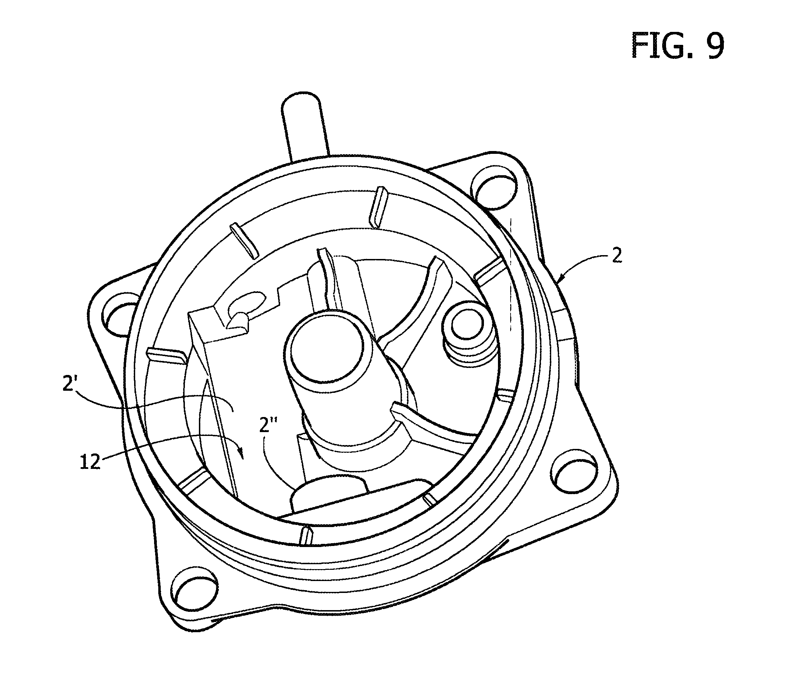

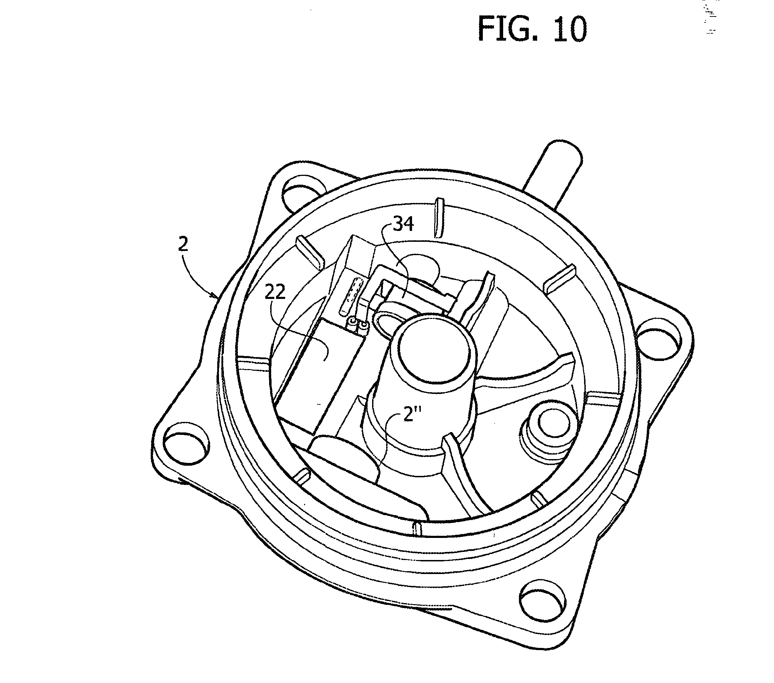

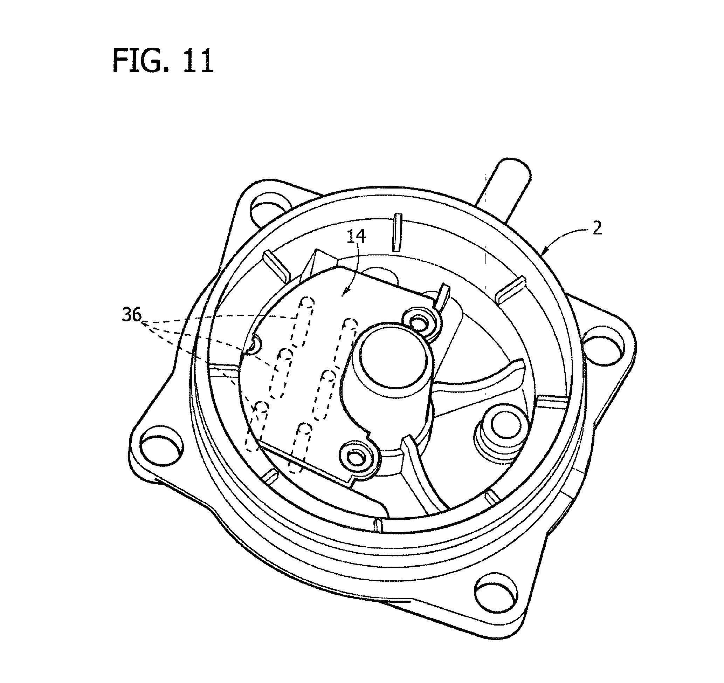

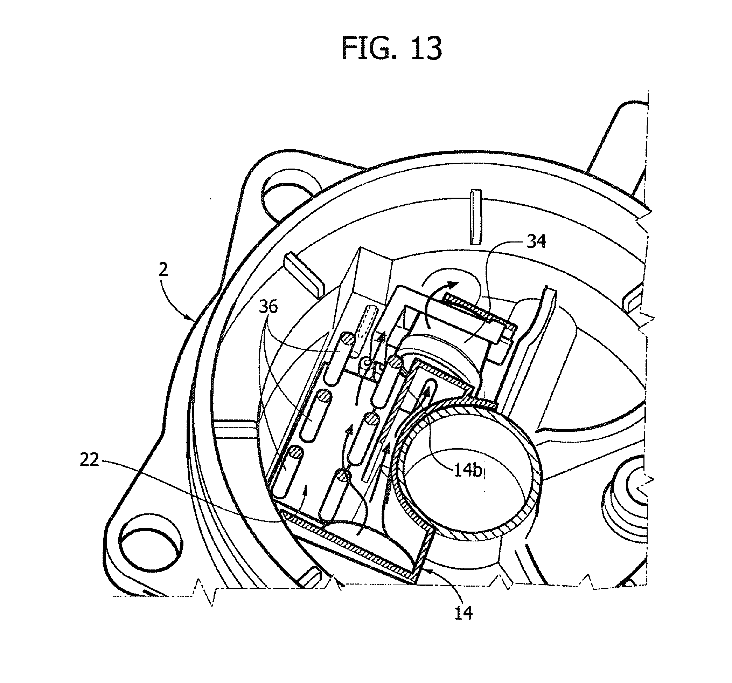

In this connection, Figure 6 illustrates the flow of fuel that is determined within the fuel-filter head unit represented in Figures 1 to 7, whereas illustrated in Figure 13 is the flow of fuel that is determined within the fuel-filter head unit illustrated in Figures 8 to 13.

As will be seen in what follows, there can be provided formations within the compartment having the function of rendering the flow of fuel vorticose and/or turbulent so as to increase the efficiency of heat exchange between the heating assembly and the fuel itself.

The body 2 further comprises an electrical-connection portion 16, for electrical connection of the heating assembly to an external electrical supply source, for example, the battery of the motor vehicle. Said connection portion comprises inside it electrical contacts 16', which project within the compartment for electrical connection to the heating assembly 20.

In various embodiments, as in the ones illustrated, the heating assembly comprises a heating element 22 and a control means for controlling said heating element. In various embodiments, as in the ones illustrated, the control means comprises a temperature sensor designed to detect the temperature of the fuel. The control means is configured for activating electrical supply to the heating element as a function of the temperature detected by the temperature sensor.

As will be seen in detail in what follows, in various embodiments, like the ones illustrated, the heating element 22 has two opposite heating surfaces. Said element is set within the compartment so as to face with a first surface the bottom wall of the compartment 12 and with the other surface the covering portion 14a. Furthermore, within the compartment the heating element is positioned so as to be set at a distance both from the bottom wall (or from the plane defined thereby) and from the covering portion (or from the plane defined thereby) in such a way that both of its two heating surfaces will be impinged upon by the flow of fuel. In various embodiments, as in the ones illustrated, the bottom wall and the covering portion define two respective opposed surfaces, which delimit the compartment transversely, in a minor dimension of extension thereof, and which can be plane, concave, or convex.

The distance of the heating element, from the bottom wall and from the covering portion respectively, is determined according to the desired flow of fuel in a region corresponding to its two opposite surfaces. In various embodiments, the heating element can be positioned at different distances, respectively, from the bottom wall and from the covering portion. In preferred embodiments, the heating element is set closer to the bottom wall.

As will be seen in detail in what follows, in various embodiments, as in the ones illustrated, the heating element 22 is positioned in the way referred to above, thanks to the engagement of the two opposite heating surfaces, on one side by formations provided on the covering element or on the aforesaid bottom wall, and on the opposite side by an elastic spring clip, which presses the heating element against the aforesaid formations, and likewise has the function of providing direct or indirect electrical connection of the heating element to an electrical contact of the electrical-connection portion 16.

In what follows, the two embodiments illustrated in the figures will now be described in detail. The elements in common will be designated by the same reference numbers.

In the embodiment illustrated in Figures 1 to 7, the heating assembly has a heating element 22 and a command and control board 24 operatively connected to the heating element.

In various embodiments, as in the one illustrated, the heating element 22 is formed by a metal plate, fixed on which are, for example via welding, one or more PTC ceramic heating elements.

In various embodiments, as in the one illustrated, the electronic command and control board comprises, instead, a temperature sensor, preferably an NTC thermistor, and control means designed to enable the supply of electric current to the heating element as a function of the temperature detected by said sensor. In particular, said control means are configured for activating electrical supply to the PTC elements below a pre-determined temperature threshold. The electrical circuit of the electronic board can be provided in any configuration suitable for the purposes referred to herein, and consequently will not be described herein in detail.

In various embodiments, as in the one illustrated, the electronic board has a path of electrical contact that is connected electrically to the heating element, via a rivet 21, which also has the function of providing reciprocal mechanical connection of the heating element and the electronic board.

In various embodiments, as in the one illustrated, there is moreover provided a metal spring clip 18, which electrically connects together a portion of electrical contact 24' of the electronic board and the PTC elements. Said spring clip is set between the covering element 14 and the heating element 22, and is appropriately shaped because, when the covering element comes to close the compartment, at the same time it presses the spring clip against the heating element 22 and the electronic board 24 so as to keep them fixed in position.

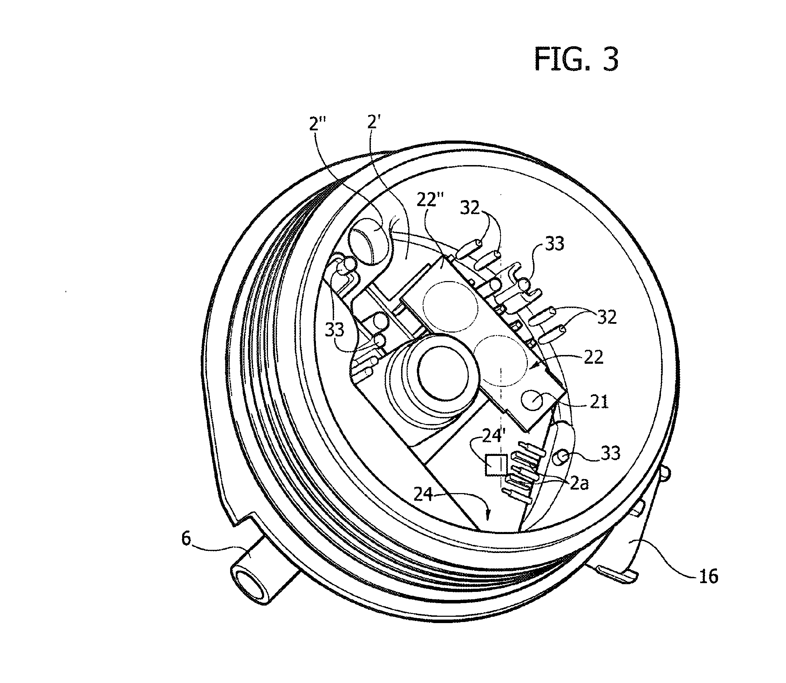

With reference to Figure 3, the compartment 12 of the body 2 substantially occupies - with reference to the dimensions in plan view - half of the space inside said body. Said compartment is identified by a bottom wall 2', which is lowered (with reference to Figure 3) with respect to the rest of the bottom of said body.

In various embodiments, as in the one illustrated, present in a position corresponding to a side portion of said compartment is an opening 2'' in fluid communication with the inlet 4.

In various embodiments, as in the one illustrated, the bottom wall 2' has a first set of formations 30 arranged in two opposite rows, brought to bear upon which are opposite longitudinal edges of a first surface 22' of the heating element 22. Said formations have the function of keeping the heating element in a raised position (with reference to the figures) with respect to the plane of the bottom wall 2', at an appropriate distance so that, between the surface 22' and the bottom wall 2' , a pre-defined flow of fuel is created. In various embodiments, as in the one illustrated in the figures, one or more formations 30 of each row have an L-shaped profile, which is oriented so as to face the short leg of said profile towards the opposed row of formations, whereas the long leg extends substantially orthogonal to the bottom wall 2'.

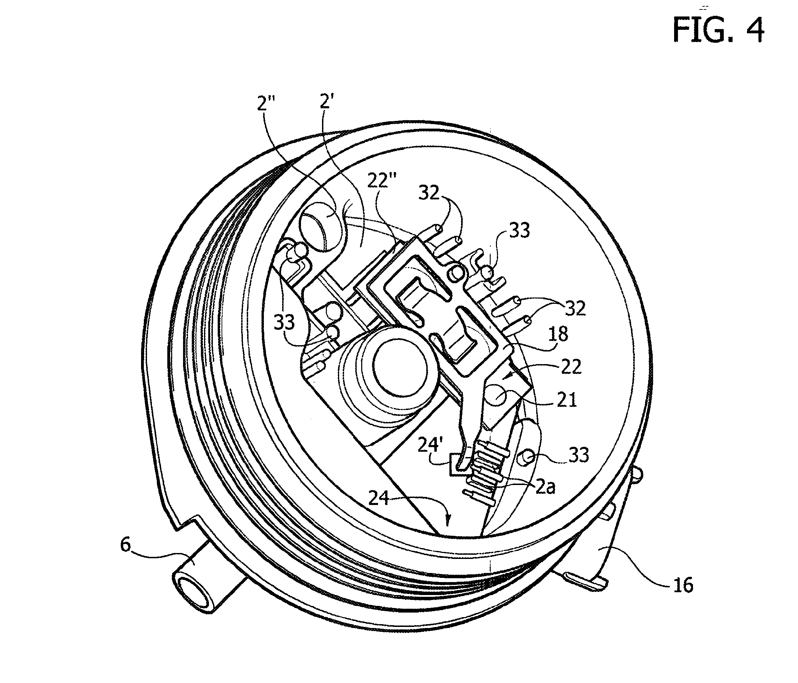

Figure 4 illustrates the heating assembly 20 set within the compartment 12. With reference to said figure, the heating element is bearing upon the formations 30 and, where said formations have the L-shaped profile referred to above, the heating element bears upon their short leg, and is instead constrained laterally by their long leg.

In various embodiments, as in the one illustrated in the figures, the formations referred to above have an arrangement such that the heating element is oriented, within the compartment, so that its longitudinal direction is substantially in line with the aforesaid opening 2''.

In various embodiments, as in the one illustrated in the figures, the electronic board 24 is set substantially diametrally opposite to the opening 2'' with respect to the heating element. In a position corresponding to the electronic board 24, the electrical contacts 16' of the connection portion 16 project within the compartment, through respective openings in the body 2 in the proximity of the bottom wall 2'.

In various embodiments, as in the one illustrated in the figures, said electrical contacts are set in electrical connection with electrical-contact paths of the board, via, for example, metal deposits of tin that coat the aforesaid electrical contacts and the paths of the board with which these are set in connection. In various embodiments, as in the one illustrated, in a position corresponding to said openings the bottom wall has one or more ribbings 2a designed to engage corresponding slits of the electronic board.

In various embodiments, as in the one illustrated in the figures, the bottom wall moreover has a second set of formations 32 designed to define as a whole a discontinuous bearing edge, against which the covering element 14 comes to engage. In particular, the formations of said second set have a height, with respect to the bottom wall, such that the covering element comes to be set apart from the heating element by an appropriate distance so that, between the covering portion 14a and a second surface 22'' of the element 14 facing it (and opposite to the surface 22' referred to above), a pre-defined flow of fuel is created. As described previously, set between the covering element 14 and the heating element 22 is the spring clip 18, which is pressed by the covering element against the heating element and the electronic board.

As already mentioned previously, in various embodiments, as in the one illustrated in the figures, the covering element has transverse walls 14b, which determine the flow of fuel within the compartment, and an opening 14', through which the flow of fuel exits from the compartment to reach the filtering element within the filter container.

In various embodiments, as in the one illustrated in the figures, said walls have a configuration such that the flow of fuel that enters the compartment, through the opening 2'' of the body 2, is conveyed first into a position corresponding to the electronic board 24, then into a position corresponding to the heating element 22, and finally exits from the compartment through the opening 14' (see Figure 6).

In various embodiments, as in the one illustrated in the figures, the covering element 14 has a transverse wall 14b that extends around part of the heating element 22 so as to separate it from the opening 2''. The flow that enters the compartment through the opening 2'' is consequently prevented from passing directly onto the heating element, and is forced to be directed towards the control board 24; only after traversing the electronic board, is the flow directed towards the heating element.

In various embodiments, as in the one illustrated in the figures, the opening 14', which sets the compartment in communication with the filter container, is provided on the covering portion 14a in a position corresponding to the opening 2'' of the body 2, in such a way that the fuel traverses the compartment forwards and backwards, and that, in particular, moving towards the opening 14', traverses the entire heating element. The opening 14' is separated from the opening 2'', which is contiguous thereto, via the wall 14b, so as to prevent a sort of "short circuit", i.e., that the flow entering the compartment, through the opening 2', exits directly from the opening 14', without having first followed the path referred to above.

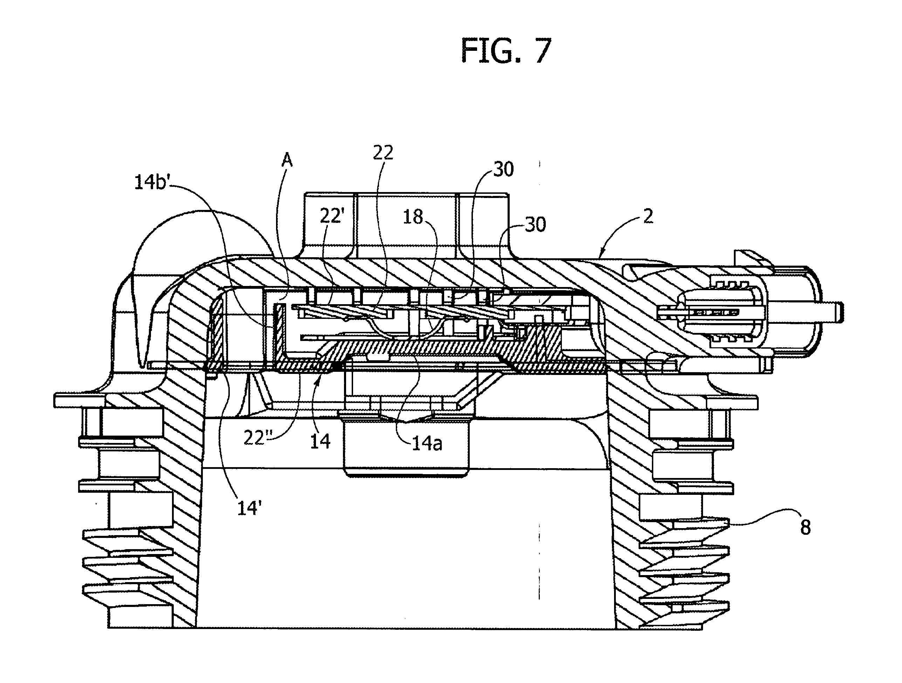

In various embodiments, as may be seen in Figure 7, in a position corresponding to the opening 14' there is moreover provided a wall 14b' substantially orthogonal to the covering portion 14a and of a height lower than that of the wall 14b. In particular, the wall 14b' has a pre-determined height in order to perform the following functions:
- identifying, in the proximity of the bottom wall 2', a restricted section of flow A, designed to bring about an accelerated flow at outlet from the compartment 12; in this connection, the present applicant has in fact found that the acceleration of flow that occurs at said section favours transport, by the flow of fuel, of possible air bubbles outside the compartment; and
- defining a minimum level of the fuel within the compartment 12, corresponding precisely to the height of the wall 14b'; in this connection, the present applicant has, in fact, found that in this way it is ensured that the heating element 22 is always completely immersed in the fuel.

It should be noted that the formations provided on the covering element and on the bottom wall, in addition to performing the functions referred to above, likewise set up a condition of turbulence (understood as condition in which the flow has a degree of disorder such as not to be laminar) in the flow of fuel that traverses the compartment, thus favouring heat exchange between the fuel and the heating element. In any case, in addition to said formations, it is possible to envisage further formations, on the bottom wall and/or on the covering element, purposely provided for said purpose.

In various embodiments, as in the one illustrated in the figures, the bottom wall has a third set of elongated formations 33, for example pin-shaped, which have a height, with respect to the bottom wall, such that they come to engage corresponding holes provided in the covering element, to be riveted on these in order to fix said element to the body 2.

In what follows, the embodiment illustrated in Figures 8 to 13 will now be described.

In said embodiment, the heating assembly comprises a heating element 22 altogether similar to the one described for the embodiments illustrated above. The means for command and control of said assembly comprises, instead, an electromechanical thermostat 34, which is operatively connected to the heating element and interfaces with the flow of fuel within the compartment.

The heating element and the thermostat are connected to a respective electrical contact 16' of the connection portion 16. In particular, the heating element is connected to the respective electrical contact via a metal spring clip 18 similar to the one described for the embodiment illustrated previously, whilst the thermostat is instead connected to the respective electrical contact via a metal plate 36 anchored to the thermostat itself.

In operation, the thermostat 34 detects the temperature of the flow of fuel within the compartment and, as a function of the temperature detected thereby, enables electrical supply to the heating element. In particular, said thermostat is configured for activating electrical supply to the PTC elements below a pre-set temperature threshold. The thermostat can be of any known type, suitable for the purposes referred to herein.

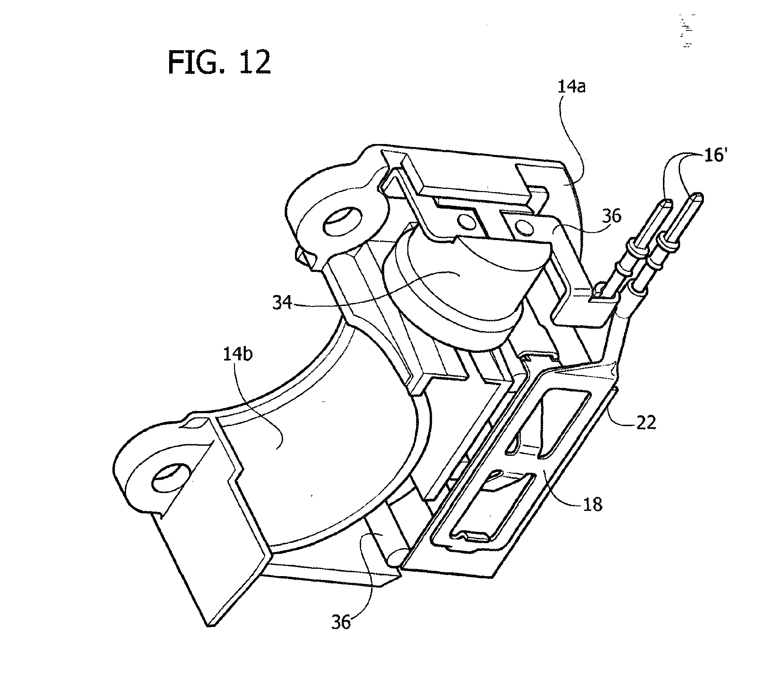

As may be seen in Figure 12, in this embodiment the heating element and the thermostat are substantially set alongside one another, in a direction transverse to the longitudinal direction of the heating element, whilst the opening 2', for inlet of the fuel into the compartment, and the opening 14', for outlet of the fuel from the compartment, are arranged in positions diametrally opposite to one another with respect to the heating element, in a direction substantially parallel to said longitudinal direction.

As mentioned previously, also in this embodiment the heating element is set within the compartment so as to face, with a first heating surface thereof, the bottom wall of the compartment 12 and, with the other heating surface, the covering portion 14a, and so as to be set at a distance both from said bottom wall and from said covering portion.

In this embodiment, the heating element is set at a distance from the bottom wall of the compartment as a result of the interposition of the aforesaid spring clip 18 between a first surface 22'' of the heating element and the bottom wall 2'. In various embodiments, as in the one illustrated, the heating element is, instead, set at a distance from the covering portion 14a, as a result of the interposition, between said covering portion and a second surface 22' of the heating element (opposite to the surface 22'' mentioned above), of formations 36 of the covering element, which project from said portion 14a in a direction transverse thereto. In various embodiments, the formations 36 have a shape elongated in said transverse direction.

In variousexamples not according to the present invention, as in the one illustrated, the transverse walls of the covering element are designed to divide the flow at inlet to the compartment into two distinct flows, one of which impinges upon the heating element, whilst the other impinges only upon the thermostat. In various embodiments, the rate of the flow of fuel directed to the heating element is faster than the rate of the flow of fuel directed to the thermostat. In particular, in various embodiments, as in the one illustrated, the covering element 14 has, alongside the formations 36, a transverse wall 14b that extends parallel to and alongside the heating element and identifies two distinct and substantially parallel passages, the first of which is directed towards the heating element, and the second towards the thermostat (see Figure 13).

In a way similar to what has been described for the embodiments illustrated previously, the bottom wall has a set of elongated formations, for example pin-shaped ones, which have a height, with respect to the bottom wall, such that they come to engage corresponding holes provided in the covering element, to be riveted on these in order to fix said element to the body 2 of the fuel-filter head unit.

As emerges from the foregoing, the fuel-filter head unit described herein has a very simple structure: in this connection, it may in particular be noted that the compartment 12 and all the formations on the body 2, purposely provided for housing the heating assembly inside it, do not require any further machining but simply the provision of an injection mould suitable for their production. Consequently, the fuel-filter head unit described herein has a configuration that can be reproduced also in processes of production of conventional fuel-filter head units, with minor adaptations.

Finally, it may be noted that, even though the fuel-filter head unit described herein has been devised with particular reference for use on diesel filters, it is in any case suitable for being used in any fuel filter that, for proper operation, in some conditions requires heating of the fuel to be filtered.

Of course, without prejudice to the principle of the invention, the details of construction and the embodiments may vary widely with respect to what has been described and illustrated herein purely by way of example, without thereby departing from the scope of the present invention as defined by the claims.

## Claims

1. A fuel-filter head unit for internal-combustion engines, comprising a body (2) defining an inlet (4) for the fuel to be filtered, an outlet (6) for the filtered fuel, and an attachment portion (8) for connection of said unit to a casing of said filter containing a filtering element,
wherein obtained within said body (2) is a compartment (12), set within which is a heating assembly (20),
wherein said compartment (12) is in fluid communication with said inlet (4) and is closed by a covering element (14) in such a way that the fuel that enters said compartment (12) moves inside it according to a flow that traverses said heating assembly (20),
wherein said covering element (14) has an opening (14'), designed, in the condition where said fuel-filter head unit is installed, to set said compartment (12) in fluid communication with said casing of said filter, and
wherein said heating assembly (20) comprises a heating element (22) and a temperature sensor (24, 34),
said head unit being **characterised in that** said covering element (14) has a portion designed to define the cover for said compartment (12) and at least one wall (14b) transverse to said portion, which is designed to divide said compartment (12) into spaces designed to define a path of flow of the fuel, and wherein said transverse wall (146) has a configuration such that the fuel that enters the compartment (17) moves first in the area of said temperature sensor (24, 34), and then in the area of said heating element (22), wherein said transverse wall (14b)extends around part of said heating element (22) so as to separate it from an opening (2") of said body (2) in fluid communication with said inlet (4).

2. The fuel-filter head unit according to any one of the preceding claims, wherein said temperature sensor (24, 34) is an NTC element associated to an electronic command and control board, or else an electromechanical thermostat, and wherein said heating element (22) is a PTC ceramic element.

3. The fuel-filter head unit according to any one of the preceding claims, wherein said body (2) comprises an electrical-connection portion (16) for electrical connection of the fuel-filter head unit to an external electrical supply source, said connection portion (16) comprising electrical contacts (16'), which project within said compartment (12) for electrical connection to said heating assembly (20).

4. The fuel-filter head unit according to any one of the preceding claims,
wherein said body (2) is substantially shaped like a half-shell and has a bottom wall (2'), designed to identify said compartment,
and wherein said heating assembly (20) has a heating element (22) that is located in a position set at a distance both from the surface facing it of said bottom wall (2') and from the surface facing it of said covering element (14).

5. The fuel-filter head unit according to Claim 4, wherein provided on said bottom wall (2'), or on said covering element (14), are formations (30; 36) projecting transversely, upon which there comes to bear a first surface (22') of said heating element (22), and wherein a second surface (22'') of said heating element (22), opposite to said first surface (22'), is engaged by an elastic spring clip (18), which sets itself between said covering element (14), or said bottom wall (2'), and said second surface (22") and presses said heating element (22) against said formations (30; 36).

6. The fuel-filter head unit according to Claim 5,
wherein said body (2) comprises an electrical-connection portion (16) for electrical connection of the fuel-filter head unit to an external electrical supply source, said connection portion (16) comprising electrical contacts (16') that project within said compartment (12) for electrical connection to said heating assembly (20), and
wherein said elastic spring clip (18) electrically connects, directly or indirectly, said heating element (22) with one of said electrical contacts of said electrical-connection portion (16).

7. The fuel-filter head unit according to any one of Claims 5 and 6, wherein said formations (30) on said bottom wall (2') are arranged in two opposite rows, with respect to the heating element (22), and keep the heating element (22) in a position away from said bottom wall (2').

8. The fuel-filter head unit according to Claim 7, wherein said formations (30) are in positions of said compartment (12) such that they are able to be impinged upon by the flow of fuel that traverses said compartment (12).

9. The fuel-filter head unit according to any one of the preceding claims,
wherein said body (2) is substantially shaped like a half-shell and has a bottom wall (2') designed to identify said compartment (12), and
wherein provided on said bottom wall (2') are formations (33) elongated in the direction transverse to the plane of said bottom wall (2'), which are designed to engage corresponding holes of said covering element (14) for fixing said covering element (14) to said body (2).

10. The fuel-filter head unit according to Claim 9, wherein provided on said bottom wall (2') are a series of formations (32), designed to define as a whole a bearing edge, against which said covering element (14) comes to engage.

11. The fuel-filter head unit according to Claim 1, wherein provided in a position corresponding to said opening (14') is a further wall (14b') substantially orthogonal to the covering portion (14a) of said covering element (14), which has a pre-determined height in order to perform at least one of the following functions:
- identifying, in the proximity of said bottom wall (2'), a restricted section of flow (A), designed to bring about an accelerated flow at outlet from said compartment (12); and
- defining a minimum level of the fuel within said compartment (12), corresponding precisely to the height of said further wall (14b').

## Patentansprüche

1. Kraftstofffilter-Kopfeinheit für Verbrennungsmotoren, die einen Körper (2) umfasst, der einen Einlass (4) für den zu filternden Kraftstoff, einen Auslass (6) für den gefilterten Kraftstoff sowie einen Anbringungsabschnitt (8) zum Verbinden der Einheit mit einem Gehäuse des Filters aufweist, der ein Filterelement enthält,
wobei in dem Körper (2) eine Kammer (12) vorhanden ist, in die eine Heizanordnung (20) eingesetzt ist,
die Kammer (12) in Fluidverbindung mit dem Einlass (4) ist und durch ein Abdeckelement (14) so verschlossen ist, dass sich der Kraftstoff, der in die Kammer (12) eintritt, darin entsprechend einem Strom bewegt, der die Heizanordnung (20) durchläuft,
das Abdeckelement (14) eine Öffnung (14') aufweist, die dazu dient, in dem Zustand, in dem die Kraftstofffilter-Kopfeinheit installiert ist, die Kammer (12) in Fluidverbindung mit dem Gehäuse des Filters zu bringen, und
die Heizanordnung (20) ein Heizelement (22) sowie einen Temperatursensor (24, 34) umfasst,
und die Kopfeinheit **dadurch gekennzeichnet ist, dass** das Abdeckelement (14) einen Abschnitt, der dazu dient, die Abdeckung für die Kammer (12) zu bilden, und wenigstens eine Wand (14b) quer zu dem Abschnitt aufweist, die dazu dient, die Kammer (12) in Räume zu unterteilen, die dazu dienen, einen Strömungsweg des Kraftstoffs zu bilden, und wobei die Querwand (14b) so aufgebaut ist, dass der Kraftstoff, der in die Kammer (12) eintritt, sich zuerst in dem Bereich des Temperatursensors (24, 34) und dann in dem Bereich des Heizelementes (22) bewegt, und die Querwand (14b) um einen Teil des Heizelementes (22) herum verläuft und es so von einer Öffnung (2") des Körpers (2) trennt, die in Fluidverbindung mit dem Einlass (4) steht.

2. Kraftstofffilter-Kopfeinheit nach einem der vorangehenden Ansprüche, wobei der Temperatursensor (24, 34) ein NTC-Element, das mit einer elektronischen Befehls-und-Steuer-Platine verbunden ist, oder ansonsten ein elektromechanischer Thermostat ist, und das Heizelement (22) ein PTC-Keramikelement ist.

3. Kraftstofffilter-Kopfeinheit nach einem der vorangehenden Ansprüche, wobei der Körper (2) einen elektrischen Verbindungsabschnitt (16) zur elektrischen Verbindung der Kraftstofffilter-Kopfeinheit mit einer externen Stromversorgungsquelle umfasst und der Verbindungsabschnitt (16) elektrische Kontakte (16') umfasst, die im Inneren der Kammer (12) zur elektrischen Verbindung mit der Heizanordnung (20) vorstehen.

4. Kraftstofffilter-Kopfeinheit nach einem der vorangehenden Ansprüche,
wobei der Körper (2) im Wesentlichen wie eine Halbschale geformt ist und eine Bodenwand (2") hat, die dazu dient, die Kammer zu erkennen,
und die Heizanordnung (20) ein Heizelement (22) aufweist, das sich an einer Position befindet, die in einem Abstand sowohl zu der ihr zugewandten Fläche der Bodenwand (2') als auch zu der ihr zugewandten Fläche des Abdeckelementes (14) liegt.

5. Kraftstofffilter-Kopfeinheit nach Anspruch 4, wobei an der Bodenwand (2') oder an dem Abdeckelement (14) Strukturen (30; 36) vorhanden sind, die quer vorstehen und an denen eine erste Fläche (22') des Heizelementes (22) anliegt, und eine zweite Fläche (22") des Heizelementes (22), die der ersten Fläche (22') gegenüberliegt, mit einer elastischen Federklemme (18) in Eingriff kommt, die sich zwischen dem Abdeckelement (14) oder der Bodenwand (2') und der zweiten Fläche (22") befindet und das Heizelement (22) an die Strukturen (30; 36) drückt.

6. Kraftstofffilter-Kopfeinheit nach Anspruch 5, wobei der Körper (2) einen elektrischen Verbindungsabschnitt (16) zur elektrischen Verbindung der Kraftstofffilter-Kopfeinheit mit einer externen Stromversorgungsquelle umfasst, der Verbindungsabschnitt (16) elektrische Kontakte (16') umfasst, die im Inneren der Kammer (12) zur elektrischen Verbindung mit der Heizanordnung (20) vorstehen; und
die elastische Federklemme (18) das Heizelement (22) direkt oder indirekt elektrisch mit einem der elektrischen Kontakte des elektrischen Verbindungsabschnitts (16) verbindet.

7. Kraftstofffilter-Kopfeinheit nach einem der Ansprüche 5 und 6, wobei die Strukturen (30) an der Bodenwand (2') in zwei aneinander gegenüberliegenden Reihen in Bezug auf das Heizelement (22) angeordnet sind und sie das Heizelement (22) an einer von der Bodenwand (2') entfernten Position halten.

8. Kraftstofffilter-Kopfeinheit nach Anspruch 7, wobei sich die Strukturen (30) an Positionen der Kammer (12) befinden, an denen der Strom von Kraftstoff auf sie auftreffen kann, der die Kammer (12) durchläuft.

9. Kraftstofffilter-Kopfeinheit nach einem der vorangehenden Ansprüche,
wobei der Körper (2) im Wesentlichen wie eine Halbschale geformt ist und eine Bodenwand (2') hat, die dazu dient, die Kammer (12) zu erkennen, und
an der Bodenwand (2') Strukturen (33) vorhanden sind, die in der Richtung quer zu der Ebene der Bodenwand (2') verlängert sind und dazu dienen, in entsprechende Löcher des Abdeckelementes (14) einzugreifen, um das Abdeckelement (14) an dem Körper (2) zu befestigen.

10. Kraftstofffilter-Kopfeinheit nach Anspruch 9, wobei an der Bodenwand (2') eine Reihe von Strukturen (32) vorhanden sind, die dazu dienen, als Ganzes eine Anliegekante zu bilden, mit der das Abdeckelement (14) in Eingriff kommt.

11. Kraftstofffilter-Kopfeinheit nach Anspruch 1, wobei an einer Position, die der Öffnung (14') entspricht, im Wesentlichen im rechten Winkel zu dem Abdeckabschnitt (14a) des Abdeckelementes (14) eine weitere Wand (14b') vorhanden ist, die eine vorgegebene Höhe hat, um wenigstens eine der folgenden Funktionen zu erfüllen:
- Ausbilden eines verengten Strömungsquerschnitts (A) in der Nähe der Bodenwand (2'), der dazu dient, einen beschleunigten Strom an einem Auslass aus der Kammer (12) zu bewirken; und
- Bestimmen eines minimalen Pegels des Kraftstoffs in der Kammer (12), der genau der Höhe der weiteren Wand (14b') entspricht.

## Revendications

1. Unité de tête de filtre à carburant pour moteurs à combustion interne, comprenant un corps (2) définissant une entrée (4) pour le carburant à filtrer, une sortie (6) pour le carburant filtré, et une partie de fixation (8) pour le raccordement de ladite unité à un boîtier dudit filtre contenant un élément filtrant,
dans laquelle, obtenu à l'intérieur dudit corps (2), on trouve un compartiment (12) à l'intérieur duquel se trouve un ensemble de chauffage (20),
dans laquelle ledit compartiment (12) est en communication de fluide avec ladite entrée (4) et est fermé par un élément de recouvrement (14) de sorte que le carburant qui entre dans ledit compartiment (12) se déplace à l'intérieur de ce dernier selon un écoulement qui traverse ledit ensemble de chauffage (20),
dans laquelle ledit élément de recouvrement (14) a une ouverture (14') conçue, dans la condition dans laquelle ladite unité de tête de filtre à carburant est installée, pour placer ledit compartiment (12) en communication de fluide à l'intérieur dudit boîtier dudit filtre, et
dans laquelle ledit ensemble de chauffage (20) comprend un élément de chauffage (22) et un capteur de température (24, 34),
ladite unité de tête étant **caractérisée en ce que** ledit élément de recouvrement (14) a une partie conçue pour définir le couvercle pour ledit compartiment (12) et au moins une paroi (14b) transversale par rapport à ladite partie qui est conçue pour diviser ledit compartiment (12) en des espaces conçus pour définir une trajectoire d'écoulement du carburant, et dans laquelle ladite paroi transversale (14b) a une configuration de sorte que le carburant qui entre dans le compartiment (12) se déplace tout d'abord dans la zone dudit capteur de température (24, 34) et ensuite dans la zone dudit élément de chauffage (22), dans laquelle ladite paroi transversale (14b) s'étend autour d'une partie dudit élément de chauffage (22) afin de la séparer d'une ouverture (2") dudit corps (2) en communication de fluide avec ladite entrée (4).

2. Unité de tête de filtre à carburant selon l'une quelconque des revendications précédentes, dans laquelle ledit capteur de température (24, 34) est un élément NTC associé à un tableau de commande et de contrôle électronique ou bien à un thermostat électromécanique, et dans laquelle ledit élément de chauffage (22) est un élément en céramique PTC.

3. Unité de tête de filtre à carburant selon l'une quelconque des revendications précédentes, dans laquelle ledit corps (2) comprend une partie de raccordement électrique (16) pour le raccordement électrique de ladite unité de tête de filtre à carburant à une source d'alimentation électrique externe, ladite partie de raccordement (16) comprenant des contacts électriques (16') qui font saillie à l'intérieur dudit compartiment (12) pour le raccordement électrique audit ensemble de chauffage (20).

4. Unité de tête de filtre à carburant selon l'une quelconque des revendications précédentes,
dans laquelle ledit corps (2) est sensiblement en forme de demi-coque et a une paroi inférieure (2') conçue pour identifier ledit compartiment,
et dans laquelle ledit ensemble de chauffage (20) a un élément de chauffage (22) qui est positionné dans une position à une certaine distance, à la fois de la surface lui faisant face de ladite paroi inférieure (2') et de la surface lui faisant face dudit élément de recouvrement (14).

5. Unité de tête de filtre à carburant selon la revendication 4, dans laquelle, prévues sur ladite paroi inférieure (2') ou sur ledit élément de recouvrement (14), on trouve des formations (30; 36) faisant saillie transversalement, sur lesquelles vient s'appuyer une première surface (22') dudit élément de chauffage (22) et dans laquelle une seconde surface (22") dudit élément de chauffage (22) opposée à ladite première surface (22'), est mise en prise par un étrier élastique (18) qui se trouve lui-même entre ledit élément de recouvrement (14) ou ladite paroi inférieure (2') et ladite seconde surface (22") et comprime ledit élément de chauffage (22) contre lesdites formations (30; 36).

6. Unité de tête de filtre à carburant selon la revendication 5,
dans laquelle ledit corps (2) comprend une partie de raccordement électrique (16) pour le raccordement électrique de l'unité de tête de filtre à carburant à une source d'alimentation électrique externe, ladite partie de raccordement (16) comprenant des contacts électriques (16') qui font saillie à l'intérieur dudit compartiment (12) pour le raccordement électrique audit ensemble de chauffage (20), et
dans laquelle ledit étrier élastique (18) raccorde électriquement, directement ou indirectement ledit élément de chauffage (22) avec l'un desdits contacts électriques de ladite partie de raccordement électrique (16).

7. Unité de tête de filtre à carburant selon l'une quelconque des revendications 5 et 6, dans laquelle lesdites formations (30) sur ladite paroi inférieure (2') sont agencées dans deux rangées opposées par rapport audit élément de chauffage (22) et maintiennent l'élément de chauffage (22) dans une position à distance de ladite paroi inférieure (2').

8. Unité de tête de filtre à carburant selon la revendication 7, dans laquelle lesdites formations (30) sont dans des positions dudit compartiment (12) de sorte qu'elles peuvent être affectées par l'écoulement de carburant qui traverse ledit compartiment (12).

9. Unité de tête de filtre à carburant selon l'une quelconque des revendications précédentes,
dans laquelle ledit corps (2) est sensiblement en forme de demi-coque et a une paroi inférieure (2') conçue pour identifier ledit compartiment (12), et
dans laquelle, prévues sur ladite paroi inférieure (2'), on trouve des formations (33) allongées dans la direction transversale par rapport au plan de ladite paroi inférieure (2'), qui sont conçues pour mettre en prise des trous correspondants dudit élément de recouvrement (14) afin de fixer ledit élément de recouvrement (14) sur ledit corps (2).

10. Unité de tête de filtre à carburant selon la revendication 9, dans laquelle, prévue sur ladite paroi inférieure (2'), on trouve une série de formations (32) conçues pour définir, dans son ensemble, un bord de support contre lequel ledit élément de recouvrement (14) vient se mettre en prise.

11. Unité de tête de filtre à carburant selon la revendication 1, dans laquelle, prévue dans une position correspondant à ladite ouverture (14'), on trouve une autre paroi (14b') sensiblement orthogonale à ladite partie de recouvrement (14a) dudit élément de recouvrement (14) qui a une hauteur prédéterminée afin de réaliser au moins l'une des fonctions suivantes:
identifier, à proximité de ladite paroi inférieure (2'), une section limitée d'écoulement (A) conçue pour entraîner un écoulement accéléré à la sortie dudit compartiment (12); et
définir un niveau minimum du carburant à l'intérieur dudit compartiment (12), correspondant précisément à la hauteur de ladite paroi supplémentaire (14b').
